# EUROPEAN PATENT SPECIFICATION

(11) **EP 1 184 274 B1**
(45) Date of publication and mention of the grant of the patent: **02.11.2005**
(21) Application number: 01119380.2
(22) Date of filing: 10.08.2001
(51) Int. Cl.: B62K 15/00, B62M 23/02

(54) **Bicycle**
Fahrrad
Bicyclette

(30) Priority: 31.08.2000 JP 2000263903; 14.12.2000 JP 2000379923
(43) Date of publication of application: 06.03.2002
(73) Proprietor: HONDA GIKEN KOGYO KABUSHIKI KAISHA, Minato-ku, Tokyo (JP)
(72) Inventor: Nakagomi, Yoshio, K. K. Honda Gijutsu Kenkyusho, Wako-shi, Saitama (JP); Maruyama, Tomoyuki, K. K. Honda Gijutsu Kenkyusho, Wako-shi, Saitama (JP); Nagura, Hidenori, K. K. Honda Gijutsu Kenkyusho, Wako-shi, Saitama (JP); Shimmura, Hiroyuki, K. K. Honda Gijutsu Kenkyusho, Wako-shi, Saitama (JP); Yahagi, Kunio, K. K. Honda Gijutsu Kenkyusho, Wako-shi, Saitama (JP); Iseno, Mitsuru, K. K. Honda Gijutsu Kenkyusho, Wako-shi, Saitama (JP)
(74) Representative: Liska, Horst

(56) References cited:
- EP-A- 0 905 013
- EP-A- 0 905 014
- WO-A-99/11512
- BE-A- 668 002
- DE-A- 2 038 816
- DE-B- 1 298 012
- FR-A- 2 707 585
- SU-A- 472 054
- US-A- 5 772 227
- US-A- 5 975 551
- PATENT ABSTRACTS OF JAPAN vol. 1998, no. 10, 31 August 1998 (1998-08-31) & JP 10 129571 A (YAMAHA MOTOR CO LTD), 19 May 1998 (1998-05-19)

## Description

This invention relates to a bicycle, and more particularly to a bicycle wherein front and rear partial frames which compose a body frame can be disassembled from each other.

A power-assisted bicycle is known which includes a manually operated driving system for transmitting treadling force applied to a pedal to a rear wheel and a motor driving system capable of adding assisting power to the manually operated driving system in response to the treading force. Various inventions have been proposed for the structure of the body frame of the power-assisted bicycle described. For example, a power-assisted bicycle is disclosed in the official gazette of Japanese Patent Laid-Open No. Hei 10-129571wherein a power unit including the manually operated driving system and the motor driving system described above is disposed on a rear arm side of the vehicle body and the power unit and the rear arm are removably mounted as a unitary member on a frame on the front side of the vehicle body.

A power-assisted bicycle which can be folded up is very convenient in that it can be carried in its folded up state to a resort, a shopping center or the like by a private car or the like and then assembled and used at the destination of carrying. Such a foldable bicycle is disclosed, for example, in the official gazette of Japanese Patent Laid-Open No. Hei 11-105758. Another power-assisted bicycle has been proposed wherein a frame can be disassembled in order to allow the power-assisted bicycle to be carried conveniently by a private car or the like. This power-assisted bicycle is placed into a private car or the like with the body frame thereof divided into small parts and with the stand accommodated.

In recent years, the application of a power-assisted bicycle has been expanded, and a power-assisted bicycle is sometimes carried by a private car or the like and used at a carrying destination such as a resort place. In such an instance, the power-assisted bicycle is preferably put into a state convenient for carrying by folding up or disassembling the same. Also it is demanded that, at the carrying destination, the power-assisted bicycle in a folded up state or a disassembled state can be assembled readily back into its original state. Further, not only from the convenience in carrying but also from the point of view of facilitation of custody in a small space, facility in folding up or disassembly and restoration into an original state is demanded.

In the power-assisted bicycle disclosed in the official gazette mentioned above, indeed the rear arm can be disassembled integrally with the power unit from the front side frame. With the prior art power-assisted bicycle, however, it is not taken into consideration to disassemble the body frame in ordinary use with the application described above into consideration. Accordingly, the rear arm and the front side frame are connected to each other by a great number of connection portions, and a complicated operation such as to loosen a bolt and then tighten the bolt for each of the connection portions is involved. Therefore, the prior art power-assisted bicycle has a problem in that the vehicle body cannot be disassembled readily.

In order to improve the operability or prevent soiling or damage to a body frame of a power-assisted bicycle when the body frame is disassembled, the disassembled parts of the vehicle body can preferably be placed stably on the ground. However, the conventional electrically driven bicycles are free from such consideration.

EP 0 905 013 A2 shows a bicycle in accordance with the preamble of claim 1. There, the front and rear frames are foldable at a pivot, but they cannot be completely disassembled. DE 20 38 816 A shows a bicycle in which the front and the rear frames can be completely disassembled, but cannot be folded while a pivotally connected state therebetween is maintained. In both of these prior art embodiments, only one locking means is provided locking the front and rear frames in a position for riding the bicycle.

It is an object of the present invention to provide a bicycle which allows to bring the front and rear frames either into a folded connected condition or into completely disassembled condition as desired.

It is another object of the present invention to provide a power-assisted bicycle wherein disassembled parts of a vehicle body can be placed stably on the ground.

At least the first mentioned object is achieved by a bicycle which includes a body frame including a front frame and a rear frame, a pivot element for connecting said front frame and said rear frame for folding up movement, and a locking apparatus for prohibiting the folding up movement around the pivot element, characterized in that said front frame and said rear frame can be completely disassembled from each other at said pivot element, and said bicycle comprises locking means for prohibiting complete disassembly of said front frame and said rear frame at said pivot element, and said locking means is able for operation only after the locking apparatus has been released, and after said front frame and said rear frame have been folded up around said pivot element.

Further, according to the present invention, the bicycle has a second characteristic in that a closed space for accommodating the locking means is formed at a joining portion between the front frame and the rear frame, and the closed space at the joining portion is opened by the movement of the front frame and the rear frame being folded up.

According to the first or second characteristic, in a state wherein the front frame and the rear frame are not folded up, the locking means for the pivot element cannot be canceled. In particular, the locking means cannot be canceled in an ordinary state of use. Accordingly, such complicated or solid locking means as to form the locking means so that locking thereof cannot be canceled without a tool need not be provided, but simple and easy locking means can be adopted. Therefore, the degree of freedom in designing is increased.

Further, according to the present invention, the bicycle has a third characteristic in that the pivot element includes a pivot pin, and a boss element for engaging for turning motion with the pivot pin, that one of the pivot pin and the boss element is provided one of the front frame and the rear frame while the other of the pivot pin and the boss element is provided on the other of the front frame and the rear frame, that the boss element has a cutaway portion formed therein for allowing the pivot pin to be moved in a radial direction into or out of the boss element, and that the locking means is opposed to the cutaway portion and provided on that one of the front frame and the rear frame on which the boss element is formed.

According to the third characteristic, by mounting the pivot pin, which is provided on either one of the front frame and the rear frame, into the boss element, which is provided on the other of the front frame and the rear frame, through the cutaway portion, the front frame and the rear frame are connected to each other. Since the locking means is opposed to the cutaway portion, the pivot pin does not move out of the boss element by an action of the locking means.

Furthermore, according to the present invention, the bicycle has a fourth characteristic in that the locking means includes a lock plate supported for pivotal motion and biased in a direction in which the cutaway portion is opened, a pressing member for restricting pivotal motion of the lock plate to hold the lock plate at a position at which the lock plate is opposed to the cutaway portion, and a lever member for pivoting the pressing member to cancel the pivotal motion restriction of the lock plate, and the lever member is formed integrally with the pressing member.

According to the fourth characteristic, the lock plate is held at the position, at which it is opposed to the cutaway portion, by the pressing member so that the pivot pin is locked in the boss element. Upon cancellation of the locking, the restriction to the pivotal motion of the lock plate by the pressing member is canceled by operating the lever member, and the lock plate is pivoted to open the cutaway portion.

Further, according to the present invention, the bicycle has a fifth characteristic in that the locking means includes a lock plate supported for pivotal motion and biased in a direction in which the lock plate closes up the cutaway portion, and the lock plate has an operation element formed thereon for pivoting the lock plate in a direction in which the pivot pin is inserted into the cutaway portion by an operation of a person.

According to the fifth characteristic, since the lock plate is biased so that the cutaway portion is closed up with the lock plate, the pivot pin cannot be mounted or removed through the cutaway portion, and by operating the operation portion of the lock plate, such mounting or removal is enabled. Particularly since the lock plate is pivoted in a direction in which the pivot pin is inserted, the pivot pin can be pressed against the lock plate and pushed into the boss element through the cutaway portion in addition to an operation by a person.

Further, according to the present invention, the bicycle has a sixth characteristic in that it further comprises a manually operated driving system for transmitting treadling force applied to a pedal and a motor driving system for adding assisting power to the manually operated driving system in response to the treadling force. According to the sixth characteristic, a folding up operation of the bicycle including the motor driving system and having a comparatively great weight can be facilitated.

The bicycle wherein an assist unit is carried on the body frame has a sixth characteristic in that the assist unit is supported by a front frame for supporting a front wheel or by a rear frame for supporting a rear wheel, and that a foot element is provided at a lower portion of the assist unit, and that the front or rear frame can stand by itself by means of the front or rear wheel and the foot element.

According to the sixth characteristic, since the frame structure of the split vehicle body which holds the assist unit can stand by itself, the operability in disassembly and assembly of the power-assisted bicycle can be improved.

Further, according to the present invention, the bicycle has seventh and eighth characteristics in that the foot element is a projection provided in a widthwise direction of the assist unit and that the foot element is provided at a location of a motor held by the assist unit, respectively. According to these characteristics, the frame structure can stand by itself stably.

Furthermore, according to the present invention, the bicycle has a ninth characteristic in that the foot element is provided such that a lower end thereof is positioned higher than the lowest portion of the vehicle body above the ground. According to this characteristic, there is an advantage that the lowest height of the vehicle body above the ground is not limited by the foot element.

As apparent from the foregoing description, according to the invention as set forth in claims 1, 2, the body frame can be folded up around the pivot element, and the body frame can be disassembled from the pivot element. Further, since the locking means which restricts disassembly of the vehicle body cannot be operated unless the body frame is folded up, the body frame can be disassembled only based on the user's intention to do so.

According to the invention as set forth in claims 3, 4, since the pivot pin can be moved into and out of the boss element through the cutaway portion, the body frame can be disassembled readily. Particularly according to the invention as set forth in claim 4, since the restriction to the pivotal motion of the lock plate by the pressing member is canceled by operating the lever member and the lock plate is pivoted to open the cutaway portion, the pivot pin can be removed from the boss portion only by operating the lever member.

Further, according to the invention as set forth in claim 5, by pressing the pivot pin against the lock plate to open the cutaway portion, the pivot pin can be inserted into the boss portion readily. Further, the pivot pin can be moved out of the hook 451 readily by operating the operation portion of the lock plate. Furthermore, according to the invention as set forth in claim 6, even where the bicycle is a power-assisted bicycle having a comparatively great weight, it can be folded up or disassembled readily into a compact form.

According to the invention as set forth in claims 6 to 9, since the split frame structure of the electrically driven bicycle can stand by itself, the operability in disassembly and assembly of the electrically driven bicycle can be improved. Further, since the split frame structure does not lie down on the ground, the frame structure is prevented from being soiled or damaged.

Further, according to the invention as set forth in claim 7, since the foot element is provided in the widthwise direction of the assist unit, the frame structure can stand by itself stably. Further, according to the invention as set forth in claim 8, since the foot element is provided at the location of the motor of the assist unit, when the frame structure stands by itself, the heavy motor is positioned lowermost and the self-standing of the frame structure can be stabilized. Furthermore, according to the invention as set forth in claim 9, there is an advantage that the lowest height of the vehicle body above the ground is not limited by the foot element.

In the following, an embodiment of the present invention is described with reference to the drawings.
FIG. 1 is a side elevational view of a power-assisted bicycle according to an embodiment of the present invention.
FIG. 2 is a perspective view of a rear frame as viewed from leftwardly forwardly of the vehicle body.
FIG. 3 is a plan view of the rear frame.
FIG. 4 is a partial side elevational view of an assist unit and associated elements.
FIG. 5 is a sectional view taken along line A-A of FIG. 4.
FIG. 6 is a sectional plan view of an end block provided on a front frame.
FIG. 7 is a front elevational view of the end block provided on the front frame.
FIG. 8 is a sectional plan view of a modification to the end block.
FIG. 9 is a front elevational view of the modification to the end block.
FIG. 10 is a side elevational view of a disassembled frame structure standing by itself.
FIG. 11 is a front elevational view of essential part of the frame structure of FIG. 10.
FIG. 12 is a plan view of a tray on which a power-assisted bicycle is accommodated.
FIG. 13 is a perspective view of the tray on which the power-assisted bicycle is accommodated.
FIG. 14 is a perspective view of a rear portion of a four-wheel automobile on which the tray is provided.
FIG. 15 is a sectional view of the rear portion of the four-wheel automobile on which the tray is provided.

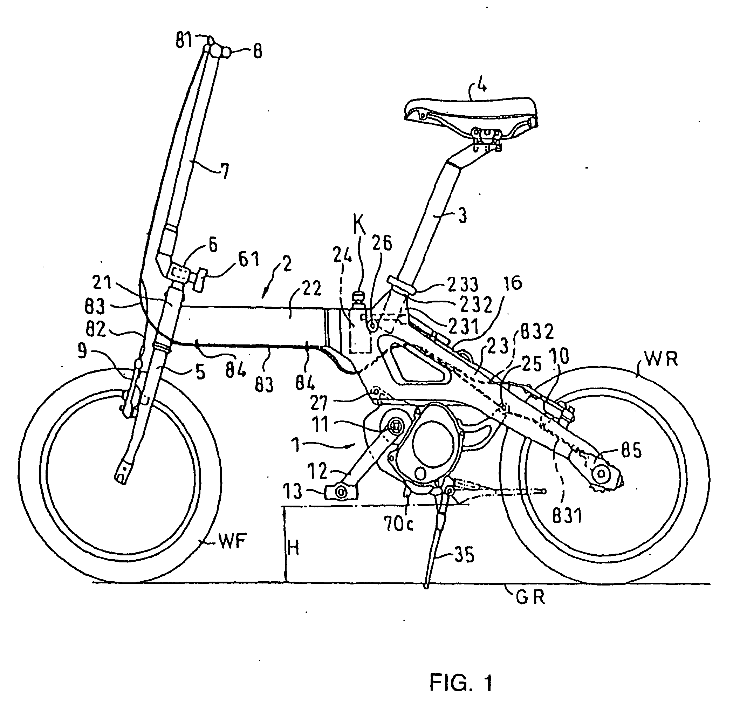

FIG. 1 is a side elevational view of a power-assisted bicycle according to an embodiment of the present invention. A body frame 2 of the power-assisted bicycle includes a head pipe 21 positioned at a front portion of the vehicle body, a front frame 22 in the form of a pipe extending substantially horizontally rearwardly from the head pipe 21, and a rear frame 23 connected to a rear end of the front frame 22. The rear frame 23 is a split frame formed from a pair of left and right aluminum die-cast products. The split frame has a bifurcated structure member having a coupling portion 231 at a location rather forwardly of the vehicle body, and a boss 232 for supporting a seat post 3 which extends obliquely rearwardly upwards from the boss 232 is formed at the coupling portion 231. The rear frame 23 has an interference provided thereon such that the seat post 3 is supported with certainty by the boss 232 by tightening a clamper 233. If the clamper 233 is loosened, then the seat post 3 can be slidably moved upwardly and downwardly with respect to the boss 233, and the height of a seat 4 mounted at the top end of the seat post 3 can be adjusted. Further, the seat post 3 can be pulled out and separated fully from the boss 232.

A front fork 5 is supported for turning motion on the head pipe 21 through a shaft portion formed at an upper portion of the front fork 5. A handle post 7 is coupled to an upper end of a shaft portion, which is formed at an upper portion of the front fork 5, through a joint 6, and a steering handle bar 8 is coupled to an upper portion of the handle post 7 as a part of a steering device. The joint 6 can be loosened by an operation of a knob 61, and the handle post 7 can be folded up around the joint 6 by the operation. A front wheel WF is supported for rotation at a lower end of the front fork 5. An end of a wire 82 extending downwardly from a brake lever 81 of the steering handle bar 8 is coupled to a front brake 9 provided for the front wheel WF.

The rear frame 23 is connected to the front frame 22 by a hinge and a locking apparatus 24. If locking of the locking apparatus 24 is canceled, then the vehicle body can be folded up around the hinge, and further, if the coupling of the hinge is canceled, then the front frame 22 and the rear frame 23 can be disassembled from each other.

The appearance of the rear frame 23 as viewed in side elevation has a configuration wherein a portion thereof rather forwardly of the vehicle body has a comparatively great width and the width decreases rearwardly. A rear wheel WR serving as a driving wheel is supported for rotation between a pair of left and right rear ends of the rear frame 23. A wire 83 is extended from a left portion of the handle bar 8 to a rear portion of the vehicle body. The wire 83 includes two wires, and one of them is a rear brake wire 832 coupled to a rear brake 10 provided on the rear frame 23, and the other one is a speed change gear wire 831 coupled to a speed change gear 85 provided in the proximity of a rear end portion of the rear frame 23. The wire 83 is securely bound to lower portions of the front frame 22 by means of bands 84, 84 while it is extended rearwardly.

In the rear frame 23, the rear brake wire 832 is distributed to the left side of the vehicle body while the speed change gear wire 831 is distributed to the right side of the vehicle body. The rear brake wire 832 and the speed change gear wire 831 distributed to the left and the right extend rearwardly in the rear frame 23.

A power assisting unit (assist unit) 1 disposed rearwardly of an extension line of the seat post 3 is suspended at a lower portion of the great width portion of the rear frame 23, that is, nearer to the front of the vehicle body. The power assisting unit 1 is secured by fastening together with the rear frame 23 upon assembly of the rear frame 23 by a bolt 25 and a bolt 27 for fastening of the left and right split parts of the rear frame 23. The assist unit 1 includes an electric motor for treadling force assistance disposed at a lowermost portion thereof, and a foot portion (boss) 70c according to the present invention. Two such foot portions 70c are provided in the widthwise direction and allow a rear assembly, which includes the rear frame 23, rear wheel WR and assist unit 1 integral with one another, to stand by itself in a three-point supporting fashion (the two foot portions 70c and the rear wheel WR) with a stand 35 folded up. It is to be noted that the foot portions 70c are formed so that lower ends thereof may not be lower than the lowest height H of the bicycle above the ground GR.

A crankshaft 11 is disposed upwardly forwardly of the motor of the assist unit 1. A pair of cranks 12 is secured to left and right ends of the crankshaft 11, and a pedal 13 is provided at an end of each of the cranks 12. While the pedals 13 are used in a state wherein they extend horizontally in the leftward and rightward directions of the vehicle body, it is possible to adopt a hinge for each of the connection portions between the pedals 13 and the cranks 12 such that, when not used, the pedals 13 can be folded up so as to extend along the cranks 12.

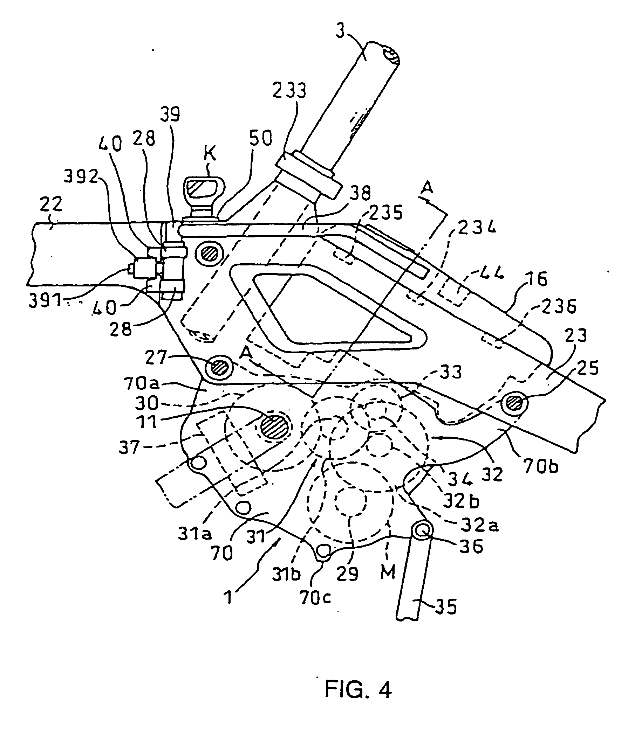

Treadling force inputted from the pedals 13 and assisting power generated by the electric motor M so as to moderate the treadling force in response to the treadling force are combined by a transmission apparatus including a gear in the assist unit 1, and output power of the transmission apparatus is extracted as rotation of a driving sprocket wheel not shown (indicated by reference numeral 33 in FIG. 4) covered with a sprocket wheel cover 14. A chain 15 (not shown in FIG. 1) is provided which transmits the rotation of the driving sprocket wheel to the rear wheel WR.

It is to be noted that the diameters of the front wheel WF and the rear wheel WR are both 16 inches.

In a space surrounded by the great width portion and the coupling portion 231 of the rear frame 23 and the bolt 25 which couples the pair of left and right rear frames 23 at rear portions thereof to each other (or a boss which supports the bolt), a battery box 16 for accommodating a battery which serves as a power supply to the electric motor M and other electric parts is mounted. In order to couple the rear frame 23 split into the left and right parts to each other, a bolt 26 disposed in the proximity of the connection location of the rear frame 23 to the front frame 22 is used in addition to the bolts 25, 27 described above.

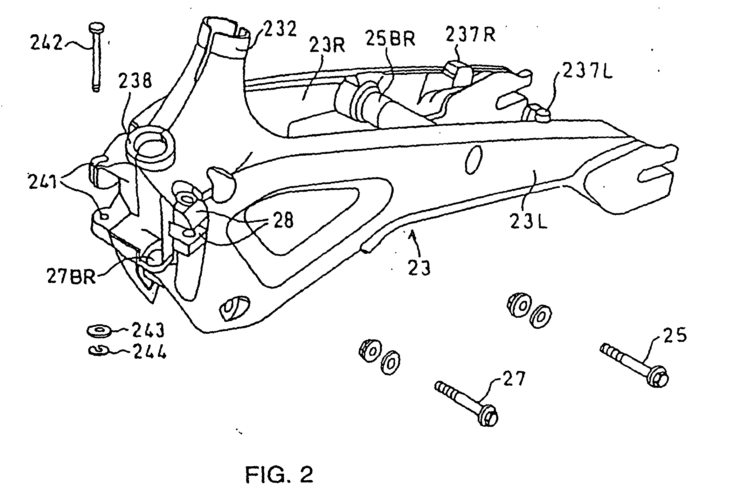

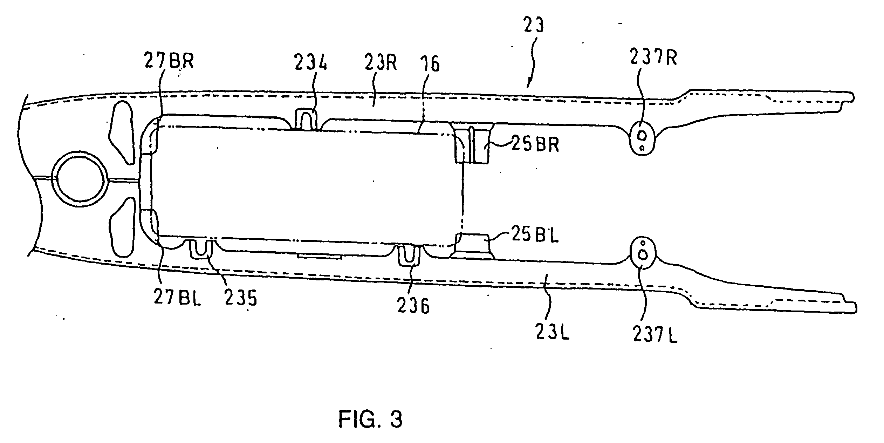

FIG. 2 is a perspective view of the rear frame 23 as viewed from leftwardly forwardly of the vehicle body, and FIG. 3 is a plan view of the rear frame 23. Referring to the figures, the rear frame 23 is composed of a left part 23L and a right part 23R, in which bosses 25BL, 25BR, 27BL, 27BR through which the bolts 25, 27 can extend are provided. While a boss for supporting a knock pin is formed also on the tightening element 26, it is not shown in FIG. 2 or 3. A hanger portion 70b (refer also to FIG. 4) formed at an upper end of the assist unit 1 is disposed in a sandwiched manner between the bosses 25BL, 25BR and between the bosses 27BL, 27BR, and is attached by fastening together with the left part 23L and the right part 23R.

Seats 234, 235, 236 for attaching the battery box 16 and seats 237L, 237R for attaching the rear brake 10 are formed on an upper face of the rear frame 23. Further, a mounting seat 238 for mounting a power supply switch for supplying current from the battery to the assist unit 1 and so forth is formed at a portion of the upper face of the rear frame 23 forwardly of the boss 232 for the seat post.

A power supply switch which is operated with a key K is mounted on the mounting seat 238. The battery box 16 is supported on the seats 234, 235, 236 and accommodated between the left part 23L and the right part 23R of the rear frame 23.

Further, a boss 241 which is one of portions of the hinge and a boss 28 for supporting a pin (not shown) of the locking apparatus 24 for rotation thereon are formed at a front end of the rear frame 23, that is, a mating face of the rear frame 23 with the front frame 22. A pin 242 is inserted in the boss 241, and a washer 243 and a snap ring 244 are mounted at an end of the pin 242. A hook on the front frame 22 side which forms part of the hinge engages with the pin 242.

FIG. 4 is a partial side elevational view illustrating a mounting positional relationship of the rear frame 23 with the battery box 16 and the assist unit 1. Referring to FIG. 4, hangers 70a, 70b for connecting the assist unit 1 to the rear frame 23 are formed on a circumference of a case body 70 of the assist unit 1. A boss is formed at an end of each of the hangers 70a, 70b, and the bolts 25, 27 extend through the bosses, respectively. The bolts 25, 27 further extend through the boss 25BL and so forth of the rear frame 23 to fasten the hangers 70a, 70b to the rear frame 23 so that the assist unit 1 is suspended on the rear frame 23.

Since the securing portion of the assist unit 1 to the rear frame 23 and the fastening portion between the left and right split parts of the rear frame 23 are provided collectively at one place in this manner, the number of parts can be reduced and the space in which the securing portion and the fastening portion are provided can be reduced in size and reduction of the size of the rear frame 23 at this portion can be anticipated.

A treadling force inputting gear 30 is coupled to the crankshaft 11 through a one-way clutch not shown, and the treadling force inputting gear 30 meshes with a small gear 31a of a combination gear 31. Meanwhile, a large gear 32a of an assisting power gear (assist gear) 32 is provided such that it meshes with a pinion 29 of the electric motor M, and the assist gear 32 which rotates integrally with the large gear 32a meshes with a small gear 32b of the combination gear 31. A large gear 31b of the combination gear 31 meshes with an output gear 34 connected to a shaft of a driving sprocket wheel 33. The case body 70 and the assist gear 32 of the assist unit 1 are preferably formed from molded parts of a resin for the object of reduction in weight, and the assist gear 32 is preferably formed as a helical gear from the point of view of the stillness and so forth.

An axle 331 for supporting the rear wheel WR is provided at a rear end of the rear frame 23, and a driven sprocket wheel 332 is coupled to the axle 331 through a one-way clutch not shown. The chain 15 extends between the driving sprocket wheel 33 and the driven sprocket wheel 332.

In this manner, rotation of the electric motor M is transmitted to the combination gear 31 through the pinion 29 and the assist gear 32 while treadling force inputted from the crankshaft 11 is transmitted to the combination gear 31 through the treadling force inputting gear. Then, the treadling force and the assisting power are combined by the combination gear 31 and transmitted to the driving sprocket wheel 33, and further transmitted to the rear wheel WR through the driven sprocket wheel 332. A controller 37 disposed at a front portion in the case body 70 controls the rotation of the motor M based on a treadling force value inputted thereto from treadling force detection means not shown.

A pivot 36 for supporting a main stand 35 made of a molded part of aluminum for pivotal motion is mounted at a rear lower portion of the case body 70. The foot portions (bosses) 70c are provided at a lower end of the case body 70. The foot portions 70c are projections for allowing the rear portion of the bicycle including the rear frame 23 to stand by itself when the front frame 22 and the rear frame 23 are disassembled from each other, and when the rear portion of the bicycle is placed on the ground, it can stand by itself on the ground by means of the foot portions 70c and the rear wheel WR.

A lock pin 39 having a lock lever is fitted in a pair of bosses 28, 28 provided at a front end of the rear frame 23. A bolt 391 is provided for pivotal motion around the lock pin 39, and a nut 392 is screwed on the bolt 391. The bolt 391 extends in a groove of an engaging portion 40 formed such that it projects from the front frame 22, and one face of the nut 392 contacts with the engaging portion 40 to form a tightening face.

A central portion of the lock pin 39, that is, a portion of the lock pin 39 on which the bolt 391 is mounted, is eccentric with respect to the hole of the boss 28 such that the contacting strength between the tightening face of the nut 392 and the engaging portion 40 can be increased or decreased by pivoting the lock lever 38. The highest value of the contacting strength between the tightening face of the nut 392 and the engaging portion 40 can be determined by the amount of turning motion of the nut 392.

In a state wherein the lock lever 38 is pivoted to a position in which it extends along the rear frame 23 as shown in the figure, the nut 392 and the engaging portion 40 contact strongly with each other so that the front frame 22 and the rear frame 23 are coupled to each other strongly. On the other hand, if the lock lever 38 is pivoted in a direction away from the rear frame 23, that is, toward a direction perpendicular to the vehicle body, due to the eccentric shape of the lock pin 39 described above, the nut 392 is displaced in a direction (forwardly of the vehicle body) away from the engaging portion 40 in accordance with the amount of eccentricity of the lock pin 39 to weaken the tightening strength by the nut 392. After the tightening strength is weakened, if the bolt 391 is pivoted around the lock pin 39, then the engagement between the nut 392 and the engaging portion 40 can be canceled, and the front frame 22 and the rear frame 23 can be folded up around the hinge 24.

A power supply switch 50 which is operated with a key K is mounted on the mounting seat 238 (FIG. 2) provided at a front portion of the rear frame 23, that is, on the front side of the boss 232 for supporting the seat post.

The battery box 16 is supported by the seats 234, 235, 236 and accommodated between the left part 23L and the right part 23R of the rear frame 23. A battery 41 is accommodated in the battery box 16. The battery 41 is formed in a pack structure in which a plurality of cells 411 each formed from, for example, a nickel hydrogen battery are accommodated. An indicator 42 for indicating the remaining amount by an LED display is provided at an upper portion of a case 412. Also a charging connector 43 which is used when the battery 41 is removed from the battery box 16 and charged up and a fuse (not shown) are provided in the case 412. A terminal (not shown) for connecting the battery 41 and the controller 37 to each other is accommodated in a projecting portion 161 at a bottom portion of the battery box 16.

A lid 162 is provided for the battery box 16, and the lid 162 is mounted on the battery box 16 using a hinge 163. In the figure, an alternate long and two short dashed line illustrates a state wherein the lid 162 is open. A window (not shown) is provided in the lid 162 so that the indicator 42 can be seen therethrough, and a key apparatus 44 is provided on the lid 162. The key apparatus 44 has a pawl 441 which can be moved out from or into the key apparatus 44 by turning a key (which is preferably used commonly as the key K for operating the power supply switch), and the pawl 441 is engaged with the battery box 16 to lock the battery box 16.

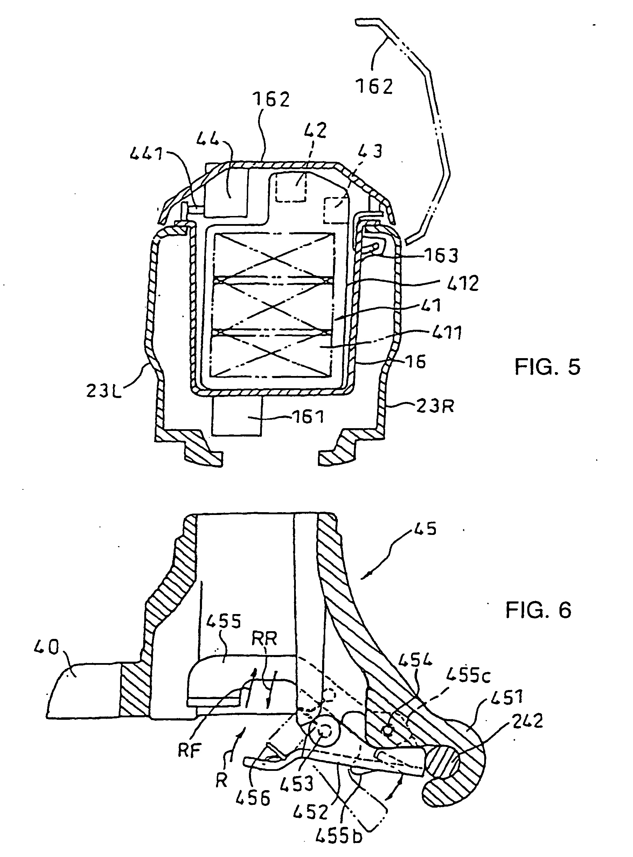

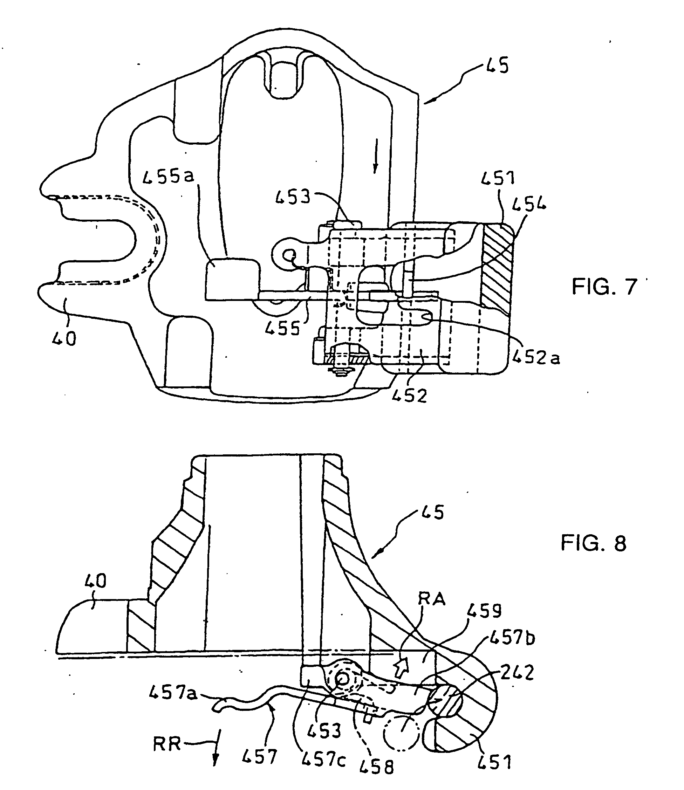

Now, the hinge 24 for connecting the front frame 22 and the rear frame 23 to each other is described in detail. FIG. 6 is a sectional plan view of a rear portion of the front frame 22 including the hinge 24, and FIG. 7 is a front elevational view (a view as viewed from rearwardly of the vehicle body) of the same. It is to be noted that the rear end portion can be formed from a rear end part (hereinafter referred to as "end block") integrated by welding to a part in the form of a pipe which forms the front frame 22. Referring to both figures, a hook 451 is formed on the end block 45 and has dimensions and a position set such that it is fitted for engagement with the pivot pin 242 between the bosses 241, 241 provided on the rear frame 23.

A lock plate 452 is provided such that it closes up an opening of the hook 451 formed in a U-shaped configuration. The lock plate 452 is supported for pivotal motion on the end block 45 by a pin 453. An operation lever 455 supported for pivotal motion by a spring pin 454 is provided on the end block 45. The operation lever 455 has an operation portion 455a for being pressed by a finger, and a hook 455b. The operation lever 455 is connected to the lock plate 452 by a tension spring 456, and the hook 455b is exposed to the front side of the lock plate 452, that is, the rear frame 23 side through a cutaway window 452a formed in the lock plate 452 and engages with the frame of the cutaway window 452a. Since the hook 455b engages with the lock plate 452, pivotal motion of the lock plate 452 in a direction indicated by an arrow mark R is restricted although the tension spring 456 acts upon the lock plate 452. The operation lever 455 has a contact portion 455c for contacting with the end block 45 in the proximity of the pivotally supported portion thereof so that pivotal motion thereof in a direction indicated by an arrow mark RR from the position shown is prohibited.

Due to the configuration, the opening of the hook 451 is closed up with an end portion of the lock plate 452, and therefore, the pivot pin 242 held in engagement with the hook 451 cannot escape from the hook 451. Accordingly, even if the locking apparatus which is operated with the lock lever 38 is canceled, the body frame (composed of the front frame and the rear frame) is merely permitted to be folded up around the pivot pin 242.

In order to further disassemble the body frame into the front frame 22 and the rear frame 23 after it is folded up, the operation portion 455a of the operation lever 455 is pushed in toward the interior (in a direction indicated by an arrow mark RF) of the end block 45. Consequently, the operation lever 455 is pivoted around the pin 454, and the lock plate 452 is pivoted around the pin 453 so that the opening of the hook 451 is opened. Accordingly, the pivot pin 242 can escape from the hook 451, and the body frame can be disassembled completely at the connection location between the front frame 22 and the rear frame 23.

The engagement of the hook 455b of the operation lever 455 and the lock plate 452 is canceled as a result of the pivotal motion of the operation lever 455 and the lock plate 452, and even after the pushing at the operation lever 455 is stopped, the open state of the opening is maintained. Therefore, the pressing operation of the operation lever 455 and the disassembly operation of the body frame can be performed stepwise and readily using both hands.

In order to assemble the disassembled body frame back into a unitary block, the pivot pin 242 is caught by the hook 451 first, and then the lock plate 452 is pushed into the hook 451 side until the hook 456b of the operation lever 455 and the lock plate 452 are engaged with each other. By the operation, the opening of the hook 451 is closed up. Then, the joining faces of the front frame 22 and the rear frame 23 are opposed to each other, and the nut 392 of the locking apparatus shown in FIG. 4 is engaged with the engaging portion 40 and the lock lever 38 is pivoted in a direction along the rear frame 23 to lock the rear frame 23.

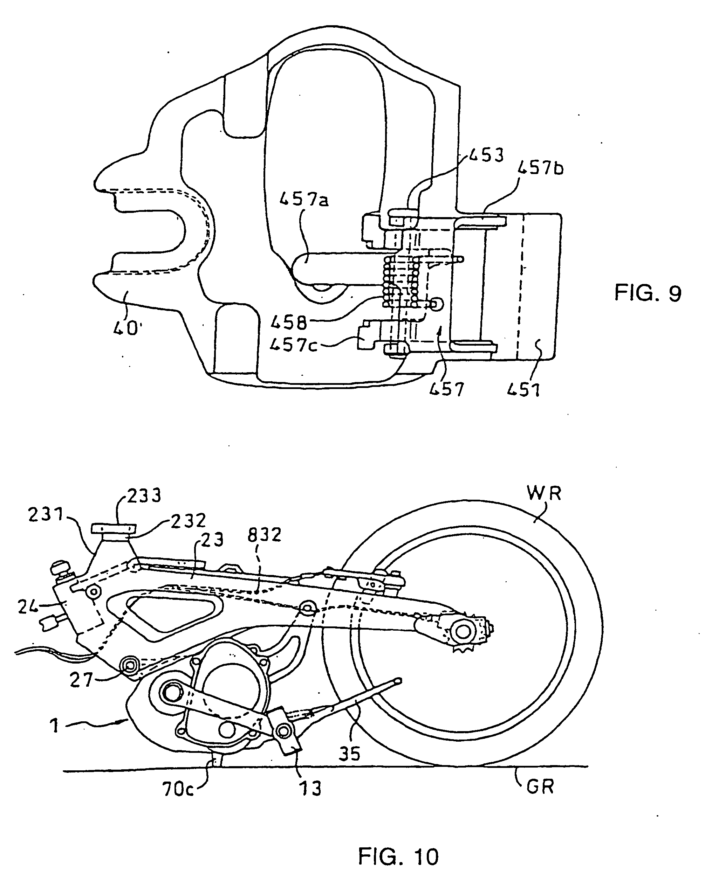

Subsequently, a modification to the hinge 24 is described. FIG. 8 is a sectional plan view of a rear end portion of the front frame 22 according to the modification to the hinge 24 and FIG. 9 is a front elevational view of the same, and like reference characters to those in FIGS. 6 and 7 denote like or equivalent elements. Referring to the figures, the pivot pin 242 secured to the rear frame 23 side is held in engagement with the hook 451, and a lock plate 457 is provided at a position at which it closes up the opening (recess) of the hook 451 so that the pivot pin 242 may not escape. The lock plate 457 has an operation portion 457a formed so as to be caught by a finger, and a locking portion 457b for closing up the recess, and is supported for pivotal motion on the end block 45 using the pin 453. A spring (torsion coil spring) 458 is held in engagement with the lock plate 457 so as to exert a force in a direction in which the operation portion 457a is moved toward the end block 45, or in other words, in a direction in which the locking portion 457b is moved away from the end block,45. However, since a rear end of the locking portion 457b, that is, an end portion 452c on the operation portion 457a side contacts with an end face of the end block 45, the lock plate 457 is not pivoted in the direction in which it moves away from the end block 45 farther than a position at which the lock plate 457 is opposed to the recess.

Meanwhile, a relief portion (recess) 459 is formed on the end block 45 so that the locking portion 457b can be pivoted in a direction (of an arrow mark RA) in which it moves toward the end block 45. The depth of the relief portion 459 is set so that the locking portion 457b escapes to the end block 45 side to open the recess of the hook 451.

Due to the configuration, since the lock plate 457 is biased by the spring 458 and the opening of the hook 451 is closed up with the locking portion 457b, the pivot pin 242 cannot escape from the hook 451. Accordingly, only if the locking apparatus which is operated with the lock lever 38 is canceled, the body frame is merely permitted to be folded up around the pivot pin 242.

In order to further disassemble the body frame into the front frame 22 and the rear frame 23 after it is folded up, the operation portion 457a of the lock plate 457 is caught with a finger and pulled in a direction (a direction indicated by an arrow mark RR) in which it is moved away from the end block 45. Consequently, the locking portion 457b is retracted into the relief portion 459 and the opening of the hook 451 is opened. Accordingly, the pivot pin 242 can escape from the hook 451, and the body frame can be disassembled completely at the connection location between the front frame 22 and the rear frame 23.

In order to assemble the disassembled body frame back into a unitary block, the pivot pin 242 is pressed against the locking portion 457b to retract the locking portion 457b into the relief portion 459. If the pivot pin 242 is accommodated into the hook 451, then the pressing force of the pivot pin 242 against the locking portion 457b is canceled. As a result, the locking portion 457b is pivoted in a direction opposite to an arrow mark RA by the biasing force of the spring 453 and the opening of the hook 451 is closed up.

According to the present modification, by pressing the pivot pin 242 against the lock plate 457 to open the cutaway portion of the hook 451, the pivot pin 242 can be inserted into the hook 451. On the other hand, in order to remove the pivot pin 242 from the hook 451, only it is required to pull the operation portion 457a of the lock plate 457 with a finger to open the cutaway portion of the hook 451, and therefore, good operability is anticipated.

It is to be noted that, in the embodiment of the hinge 24 described above, the pivot pin 242 is provided on the rear frame 23 side, and the locking apparatus including the hook 451 for being engaged by the pin pivot 242, the lock plates 452, 457, the operation lever 455 and so forth is provided on the front frame 22 side. However, conversely the pivot pin 242 may be provided on the front frame 22 side while the lock plate 452 and so forth are provided on the rear frame 23 side.

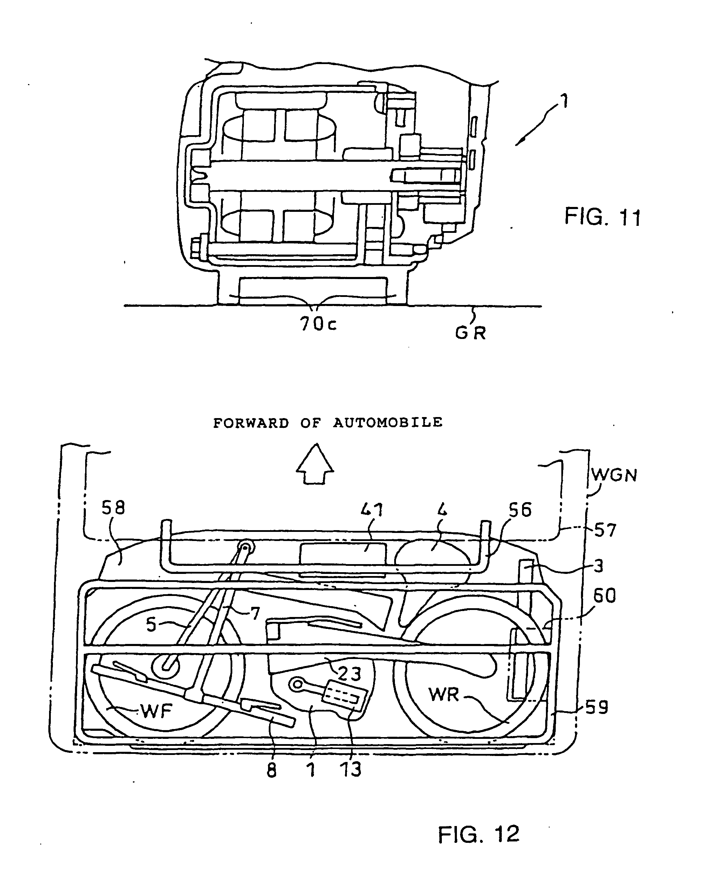

FIG. 10 shows a view of the rear assembly wherein the rear frame 23, rear wheel WR and assist unit 1 are integrated with one another and which is disassembled from the body frame and stands by itself on the ground GR making use of the foot portions 70c. Meanwhile, FIG. 11 is a view of essential part of the rear assembly of FIG. 10 as viewed from the front of the rear assembly, that is, as viewed from the left side of FIG. 5. It is to be noted that like reference characters to those of FIG. 1 denote like or equivalent elements.

As apparent from the figures, according to the present embodiment, the rear assembly disassembled from the body frame can stand by itself on the ground GR by means of the rear wheel WR and the two left and right foot portions 70c formed in the widthwise direction of the vehicle body at the lower portions of the assist unit 1. It is to be noted that the foot portions 70c are preferably provided below the motor M as shown in FIG. 4. The reason is that, when the rear assembly described above stands by itself, the heavy motor M is positioned lowermost and the stability in a self-standing state is high. Further, preferably the foot portions 70c are positioned higher than the lowest height H of the power-assisted bicycle above the ground as shown in FIG. 1. The reason is that it is intended to prevent the lowest height of the bicycle above the ground from being limited by the foot portions 70c.

It is to be noted that, while the embodiment described above is an example wherein the assist unit 1 is secured to the rear frame 23, the present invention is not limited to this and can be applied also where the assist unit is supported on the front frame 22. In this instance, the front assembly can stand by itself on the ground by means of the front wheel and the foot portions 70c.

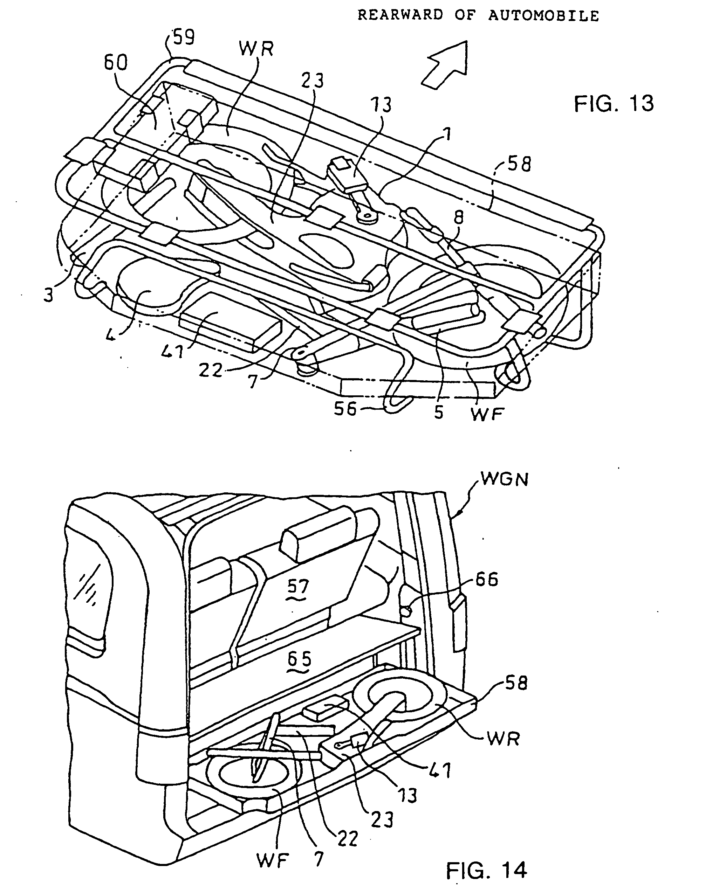

FIG. 12 is a partial plan view of a four-wheel automobile (here, a wagon type car or an RV car is presupposed) which carries a power-assisted bicycle, and FIG. 13 is a perspective view of the same from forwardly of the automobile. Referring to the figures, a tray 58 for accommodating a power-assisted bicycle is provided for advancing and retreating movement in the forward and backward directions of the automobile at a rear portion of the automobile WGN. A front frame 56 is secured to a location below a rear seat 57 in the automobile WGN and defines a limit to the forward position of the tray 58 in the automobile WGN. An upper frame 59 is secured in the automobile WGN rearwardly of the front frame 56 and supports a shelf plate (not shown) at an upper portion thereof. The tray 58 preferably made of a resin material is disposed for sliding movement in the forward and backward directions of the automobile under the guidance of rails not shown in a space surrounded by the front frame 56 and the upper frame 59. A charger 60 for the battery 41 is held at a left portion of the upper frame 59.

Now, a loading procedure for loading the power-assisted bicycle described above in a folded up state into the automobile is described. In order to load the power-assisted bicycle into the automobile WGN, the tray 58 is first drawn out to the rear of the automobile to provide a free space above the tray 58. Then, the lid 162 of the battery box 16 is opened first and the battery 41 is removed from the power-assisted bicycle and accommodated to a front middle portion of the tray 58. Then, the clamper 233 is loosened and the seat post 3 is pulled out from the rear frame 23, and then the seat post 3 and the seat 4 are disassembled. The seat 4 is accommodated to the right side of the battery 41, and the seat post 3 is accommodated to the right corner of the tray 58.

Then, the body frame is disassembled. Prior to the disassembly, the knob 61 of the joint 6 is operated to fold up the handle post 7 around the joint 6. Then, the lock lever 38 is operated to cancel the locking of the connection location between the front frame 22 and the rear frame 23 to fold up the body frame around the pivot pin 242. Then, the operation lever 455 (the example of FIG. 6) is pushed or the lock plate 457 (the example of FIG. 8) is pulled to move the pivot pin 242 out of the hook 451 of the front frame 22 to disassemble the body frame. The front frame 22, handle post 7, steering handle bar 8, front fork 5 and front wheel WF are accommodated generally to a location near to the left side of the tray 58. On the other hand, the rear frame 23, power assisting unit 1 and rear wheel WR are accommodated generally to another location near to the right side of the tray 58 after the pedals 13 are folded.

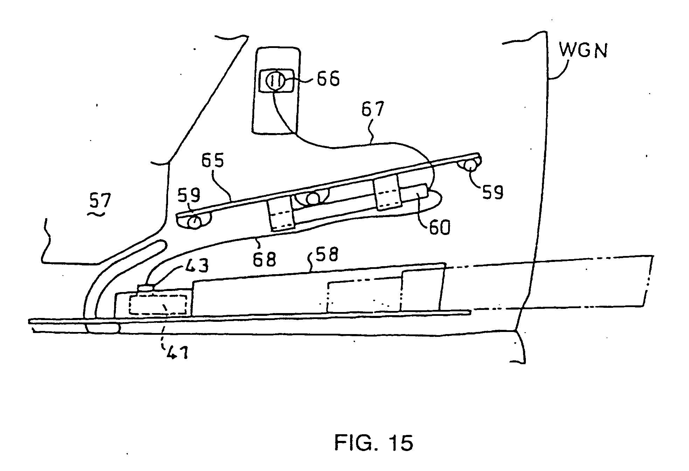

FIG. 14 is a perspective view of a rear portion of the automobile WGN, and FIG. 15 is a partial sectional view of the automobile WGN. In a condition wherein the tray 58 is pulled out as shown in FIG. 14, the power-assisted bicycle is positioned almost entirely rearwardly of the automobile from the range covered with the shelf plate 65, and a user can load or unload the electrically powered automobile into or from the automobile readily without being disturbed by the shelf plate 65.

A plug socket 66 for AC 100 volt is provided on an inside side wall of the automobile WGN. As seen in FIG. 15, power is supplied from the plug socket 66 through a cable 67 to the charger 60 mounted on the back side of the shelf plate 65, and direct current of a predetermined voltage obtained by rectification by the charger 60 is supplied to the battery 41 through a cable 68. It is to be noted that the cable 68 and the battery 41 are connected to each other through the connector 43.

In this manner, by utilizing the plug socket 66, for example, the time until the automobile arrives at a destination such as a resort can be used effectively to charge up the battery 41 with a generator driven by an engine of the automobile WGN.

The invention makes it possible to fold up or disassemble a body frame of a power-assisted bicycle readily. To achieve this, a body frame is composed of a front frame 22 and a rear frame 23, and the two are connected for folding up movement with or disassembly from each other at a pivot element. A pivot pin 242 secured to the rear frame 23 is mounted into a boss element 451 formed at a rear end of the front frame 22 through a cutaway portion. The cutaway portion is closed up with a lock lever 452 resiliently pressed by a hook 455b integral with an operation lever 455. By pressing the operation lever 455, the engagement between the hook 455b and the lock lever 452 is canceled, and the lock lever 452 is biased by a spring 456 to open the cutaway portion of the boss element 451. Consequently, the pivot pin 242 can move out of the boss element 451, and the front frame 22 and the rear frame 23 can be disassembled from each other. Since the operation lever 455 is accommodated in the inside of the body frame, it can be operated only based on the user's intention to do so.

## Claims

1. A bicycle which includes a body frame (2) including a front frame (22) and a rear frame (23), a pivot element (242, 451) for connecting said front frame (22) and said rear frame (23) for folding up movement, and a locking apparatus (24) for prohibiting the folding up movement around the pivot element (242, 451),
said front frame (22) and said rear frame (23) can be completely disassembled from each other at said pivot element (242, 451), and said bicycle comprises locking means (452, 455, 456, 457, 458) at said pivot element (242, 451) for prohibiting complete disassembly of said front frame (22) and said rear frame (23), **characterized in that** said locking means is able for release operation only after the locking apparatus (24) has been released, and after said front frame (22) and said rear frame (23) have been folded up around said pivot element (242, 451).

2. A bicycle according to claim 1, **characterized in that**
a closed space for accommodating said locking means is formed at a joining portion between said front frame (22) and said rear frame (23), and
said closed space at said joining portion is opened by the movement of said front frame and said rear frame being folded up.

3. A bicycle according to claim 1 or 2, **characterized in that**
said pivot element includes a pivot pin (242), and a boss element (451) for engaging for turning motion with said pivot pin, that
one (242) of said pivot pin (242) and said boss element is provided one (23) of said front frame and said rear frame (23) while the other (451) of said pivot pin and said boss element (451) is provided on the other (22) of said front frame (22) and said rear frame, that
said boss element (451) has a cutaway portion formed therein for allowing said pivot pin to be moved in a radial direction into or out of said boss element, and that
said locking means (452, 455, 456, 457, 458) is opposed to said cutaway portion and provided on that one of said front frame and said rear frame on which said boss element (451) is formed.

4. A bicycle according to claim 3, **characterized in that**
said locking means includes a lock plate (452) supported for pivotal motion and biased in a direction in which said cutaway portion is opened, a pressing member (455c) for restricting pivotal motion of said lock plate to hold said lock plate at a position at which said lock plate is opposed to said cutaway portion, and
a lever member (455) for pivoting said pressing member (455c) to cancel the pivotal motion restriction of said lock plate, and said lever member (455) is formed integrally with said pressing member (455c).

5. A bicycle according to claim 3, **characterized in that** said locking means includes a lock plate (457) supported for pivotal motion and biased in a direction in which said lock plate closes up said cutaway portion, and said lock plate has an operation element (457a) formed thereon for pivoting said lock plate in a direction in which said pivot pin (242) is inserted into said cutaway portion by an operation of a person.

6. A bicycle according to any one of claims 1 to 5, **characterized in that** it further comprises
a manually operated driving system for transmitting treadling force applied to a pedal (13) and a motor driving system (1) for adding assisting power to said manually operated driving system in response to the treadling force.

7. A bicycle according to claim 1 wherein an assist unit (1) is carried on said body frame, **characterized in that**
said assist unit (1) is supported by a front frame for supporting a front wheel or by a rear frame (23) for supporting a rear wheel (WR), and that
a foot element (70c) is provided at a lower portion of said assist unit (1), and that
said front or rear frame can stand by itself by means of said front or rear wheel (WR) and said foot element (70c).

8. A bicycle according to claim 7, **characterized in that** said foot element (70c) is a projection provided in a widthwise direction of said assist unit (1).

9. A bicycle according to claim 7 or 8, **characterized in that** said foot element (70c) is provided at a location of a motor (M) held by said assist unit (1).

10. A bicycle according to any one of claims 7 to 9, **characterized in that** said foot element (70c) is provided such that a lower end thereof is positioned higher than the lowest portion of said vehicle body above the ground (GR).

## Patentansprüche

1. Fahrrad, das einen Hauptrahmen (2), der einen vorderen Rahmen (22) und einen hinteren Rahmen (23) enthält, ein Gelenkelement (242, 451) zum Verbinden des vorderen Rahmens (22) und des hinteren Rahmens (23) für eine Faltbewegung, und eine Sperrvorrichtung (54), um die Faltbewegung um das Schwenkelement (242, 451) zu verhindern, enthält,
wobei der vordere Rahmen (22) und der hintere Rahmen (23) an dem Gelenkelement (242, 451) vollständig auseinander genommen werden können, und wobei das Fahrrad Sperrmittel (452, 455, 456, 457, 458) an dem Gelenkelement (242, 451) aufweist, um das vollständige Auseinandernehmen des vorderen Rahmens (22) und des hinteren Rahmens (23) zu verhindern,
**dadurch gekennzeichnet, dass** das Sperrmittel zum Lösen erst bedienbar ist, nachdem die Sperrvorrichtung (24) gelöst worden ist und nachdem der vordere Rahmen (22) und der hintere Rahmen (23) um das Gelenkelement (242, 451) herum gefaltet worden sind.

2. Fahrrad nach Anspruch 1, **dadurch gekennzeichnet, dass** ein geschlossener Raum zur Aufnahme des Sperrmittels an einem Verbindungsabschnitt zwischen dem vorderen Rahmen (22) und dem hinteren Rahmen (23) ausgebildet ist, und
der geschlossene Raum an dem Verbindungsabschnitt durch die Faltbewegung des vorderen Rahmens und des hinteren Rahmens geöffnet wird.

3. Fahrrad nach Anspruch 1 oder 2, **dadurch gekennzeichnet, dass** das Gelenkelement einen Schwenkzapfen (242) und ein Nabenelement (451) zum Eingriff zur Drehbewegung mit dem Schwenkzapfen enthält,
dass einer (242) von Schwenkzapfen (242) und Nabenelement an einem (23) von vorderem Rahmen und hinterem Rahmen (23) vorgesehen ist, während das andere (451) von Schwenkzapfen und Nabenelement (451) an dem anderen (22) von vorderem Rahmen (22) und hinterem Rahmen vorgesehen ist,
dass das Nabenelement (451) einen darin ausgebildeten Ausschnittabschnitt aufweist, um zu erlauben, dass sich der Schwenkzapfen in einer radialen Richtung in und aus dem Nabenelement bewegt, und dass das Sperrmittel (452, 455, 456, 457,458) dem Ausschnittabschnitt gegenüberliegt und an dem einen von vorderem Rahmen und hinterem Rahmen, an dem das Nabenelement (451) ausgebildet ist, vorgesehen ist.

4. Fahrrad nach Anspruch 3, **dadurch gekennzeichnet, dass** das Sperrmittel enthält: eine Sperrplatte (452), die zur Schwenkbewegung gelagert ist und in einer Richtung vorgespannt ist, in der der Ausschnittabschnitt geöffnet wird, ein Druckelement (455c) zum Begrenzen der Schwenkbewegung der Sperrplatte, um die Sperrplatte in einer Position zu halten, in der die Sperrplatte dem Ausschnittabschnitt gegenüberliegt, und
ein Hebelelement (455) zum Verschwenken des Druckelements (455c), um die Schwenkbewegungsbegrenzung der Sperrplatte aufzuheben, und wobei das Hebelelement (455) integral mit dem Druckelement (455c) ausgebildet ist.

5. Fahrrad nach Anspruch 3, **dadurch gekennzeichnet, dass** das Sperrmittel enthält: eine Sperrplatte (457), die zur Schwenkbewegung gelagert ist und in einer Richtung vorgespannt ist, in die Sperrplatte den Ausschnittabschnitt verschließt, und wobei die Sperrplatte ein daran ausgebildetes Bedienungselement (457a) aufweist, um die Sperrplatte in eine Richtung zu verschwenken, in der der Schwenkzapfen (442) durch Bedienung einer Person in den Ausschnittabschnitt eingesetzt wird.

6. Fahrrad nach einem der Ansprüche 1 bis 5, **dadurch gekennzeichnet, dass** es ferner umfasst: ein manuell betätigtes Antriebssystem zum Übertragen einer auf ein Pedal (13) ausgeübten Tretkraft sowie ein Motorantriebssystem (1) zum Hinzufügen einer Hilfskraft zu den manuell betriebenen Antriebssystem in Antwort auf die Tretkraft.

7. Fahrrad nach Anspruch 1, worin eine Hilfseinheit (1) an dem Hauptrahmen getragen ist, **dadurch gekennzeichnet, dass** die Hilfseinheit (1) an einem vorderen Rahmen zum Tragen eines Vorderrads oder an einem hinteren Rahmen (23) zum Tragen eines Hinterrads (WR) gelagert ist, und dass ein Fußelement (70c) an einem unteren Abschnitt der Hilfseinheit (1) vorgesehen ist, und dass der vordere oder hintere Rahmen mittels des Vorder- oder Hinterrads (WR) und des Fußelements (70c) von selbst stehen kann.

8. Fahrrad nach Anspruch 7, **dadurch gekennzeichnet, dass** das Fußelement (70c) ein Vorsprung ist, der in einer Breitenrichtung der Hilfseinheit (1) vorgesehen ist.

9. Fahrrad nach Anspruch 7 oder 8, **dadurch gekennzeichnet, dass** das Fußelement (70c) an einer Stelle eines von der Hilfseinheit (1) gehaltenen Motors (M) vorgesehen ist.

10. Fahrrad nach einem der Ansprüche 7 bis 9, **dadurch gekennzeichnet, dass** das Fußelement (70c) so vorgesehen ist, dass sein Unterende höher positioniert ist als der niedrigste Abschnitt des Fahrzeugkörpers über dem Boden (GR).

## Revendications

1. Bicyclette qui comprend un corps de cadre (2) comprenant un cadre avant (22) et un cadre arrière (23), un élément de pivot (242, 451) destiné à connecter ledit cadre avant (22) et ledit cadre arrière (23) afin de permettre un mouvement de pliage, et un appareil de verrouillage (24) destiné à interdire le mouvement de pliage autour de l'élément de pivot (242, 451) ; ledit cadre avant (22) et ledit cadre arrière (23) peuvent être complètement désassemblés l'un de l'autre au niveau dudit élément de pivot (242, 451), et ladite bicyclette comprend des moyens de verrouillage (452, 455, 456, 457, 458) au niveau dudit élément de pivot (242, 451) destinés à interdire le mouvement le désassemblage complet dudit cadre avant (22) et dudit cadre arrière (23) ;
**caractérisée en ce que** :
lesdits moyens de verrouillage sont capables de permettre une opération de libération uniquement après que l'appareil de verrouillage (24) a été libéré, et
après que ledit cadre avant (22) et ledit cadre arrière (23) ont été repliés autour dudit élément de pivot (242, 451).

2. Bicyclette selon la revendication 1, **caractérisée en ce que** :
un espace fermé destiné à loger lesdits moyens de verrouillage est formé sur une partie de jonction entre ledit cadre avant (22) et ledit cadre arrière (23 ; et
ledit espace fermé formé sur ladite partie de jonction est ouvert par le déplacement dudit cadre avant et dudit cadre arrière lorsqu'ils sont repliés.

3. Bicyclette selon la revendication 1 ou la revendication 2, **caractérisée :**
**en ce que** ledit élément de pivot comprend un axe de pivotement (242) et un élément de bossage (451) destiné à s'engager avec ledit axe de pivotement pour un déplacement en rotation ;
**en ce qu'**un élément (242) dudit axe de pivotement (242) et dudit élément de bossage est aménagé sur un cadre (23) dudit cadre avant et dudit cadre arrière (23), alors que l'autre élément (451) dudit axe de pivotement et dudit élément de bossage (451) est aménagé sur l'autre cadre (22) dudit cadre avant (22) et dudit cadre arrière ;
**en ce que** ledit élément de bossage (451) comprend une partie évidée formée en lui afin de permettre le déplacement dudit axe de pivotement dans une direction radiale à l'intérieur et hors dudit élément de bossage ; et
**en ce que** lesdits moyens de verrouillage (452, 455, 456, 457, 458) sont opposés à ladite partie évidée et sont aménagés sur l'un dudit cadre avant et dudit cadre arrière sur lequel est formé ledit élément de bossage (451).

4. Bicyclette selon la revendication 3 **caractérisée en ce que** :
lesdits moyens de verrouillage comprennent une plaque de verrouillage (452) supportée de manière à pouvoir se déplacer en pivotement et décentrée dans une direction dans laquelle s'ouvre ladite partie évidée, un élément de poussée (455c) destiné à limiter le déplacement en pivotement de ladite plaque de verrouillage afin de maintenir ladite plaque de verrouillage sur une position dans laquelle ladite plaque de verrouillage est opposée à ladite partie évidée ; et
un élément de levier (455) destiné à faire pivoter ledit élément de poussée (455c) afin d'annuler la limitation de déplacement en pivotement de ladite plaque de verrouillage, et ledit élément de levier (455) est formé intégralement avec ledit élément de poussée (455c).

5. Bicyclette selon la revendication 3, **caractérisée en ce que** lesdits moyens de verrouillage comprennent une plaque de verrouillage (457) supportée de manière à pouvoir se déplacer en pivotement et décentrée dans une direction dans laquelle se ferme ladite partie évidée, et ladite plaque de verrouillage comprend un élément de commande (457a) formé sur celle-ci afin de faire pivoter ladite plaque de verrouillage dans une direction dans laquelle ledit axe de pivotement (242) est introduit à l'intérieur de ladite partie évidée grâce à l'action d'un individu.

6. Bicyclette selon l'une quelconque des revendications 1 à 5, **caractérisée en ce qu'**elle comprend en outre un système d'entraînement à commande manuelle destiné à transmettre une force de pédalage appliquée à une pédale (13) et un système d'entraînement à moteur (1) destiné à ajouter une puissance d'assistance audit système d'entraînement à commande manuelle en réponse à la force de pédalage.

7. Bicyclette selon la revendication 1, dans laquelle une unité d'assistance (1) est supportée par ledit corps de cadre, **caractérisée :**
**en ce que** ladite unité d'assistance (1) est supportée par un cadre avant destiné à supporter une roue avant ou par un cadre arrière (23) destiné à supporter une roue arrière (WR) ; et
**en ce qu'**un élément actionné au pied (70c) est disposé sur une partie inférieure de ladite unité d'assistance (1) ; et
**en ce que** le cadre avant et le cadre arrière peuvent se tenir debout par eux-mêmes au moyen de ladite roue avant ou de ladite roue arrière (WR) et dudit élément actionné au pied (70c).

8. Bicyclette selon la revendication 7, **caractérisée en ce que** ledit élément actionné au pied (70c) est une saillie aménagée dans la direction de la largeur de ladite unité d'assistance (1).

9. Bicyclette selon la revendication 7 ou la revendication 8, **caractérisée en ce que** ledit élément actionné au pied (70c) est disposé à l'emplacement d'un moteur (M) maintenu par ladite unité d'assistance (1).

10. Bicyclette selon l'une quelconque des revendications 7 à 9, **caractérisée en ce que** ledit élément actionné au pied (70c) est aménagé de telle sorte qu'une extrémité inférieure de celui-ci est positionnée au-dessus du sol (GR) à un niveau plus haut que la partie la plus basse dudit corps de véhicule.
